# EUROPÄISCHE PATENTSCHRIFT

(11) **EP 2 525 557 B1**
(45) Veröffentlichungstag und Bekanntmachung des Hinweises auf die Patenterteilung: **24.10.2018**
(21) Anmeldenummer: 11004143.1
(22) Anmeldetag: 19.05.2011
(51) Int. Cl.: H04M 7/00, H04L 29/12

(54) **Telekommunikationssystem und Verfahren zum Bereitstellen von Diensten in einem Telekommunikationssystem**
Telecommunications system and method for providing services in a telecommunications system
Système de télécommunication et procédé de préparation de services dans un système de télécommunication

(43) Veröffentlichungstag der Anmeldung: 21.11.2012
(73) Patentinhaber: Deutsche Telekom AG, 53113 Bonn (DE)
(72) Erfinder: Fleischhauer, Karsten, 64297 Darmstadt (DE); Giese, Christian, 64347 Griesheim (DE)
(74) Vertreter: Schwöbel, Thilo K.

(56) Entgegenhaltungen:
- EP-A1- 1 178 643
- US-B1- 6 988 148
- US-B1- 7 788 345
- NAIMING SHEN CISCO SYSTEMS SAID OUISSAL REDBACK NETWORKS KISHORE SESHADRI MU SECURITY TOM S C SOON SBC COMMUNICATIONS DAE-CHEOL RO: "DHCP Proxy Server Micro-block Allocation Scheme For IP Address Pool Management; draft-shen-dhc-block-alloc-03.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, Nr. 3, 1. Januar 2007 (2007-01-01), XP015048521, ISSN: 0000-0004

## Beschreibung

### Stand der Technik

Die Erfindung betrifft ein Telekommunikationssystem zum Bereitstellen von Diensten in einem Telekommunikationsnetzwerk gemäß dem Oberbegriff des Anspruchs 1. Ferner betrifft die Erfindung ein entsprechendes Verfahren zum Bereitstellen von Diensten in einem Telekommunikationsnetzwerk.

Heutige Rechner- und Telekommunikationsnetzwerke umfassen technische Plattformen auf denen unterschiedliche elektronische Endgeräte, wie Computer, Telefone, Mobiltelefone, Personal Digital Devices (PDA's) und dergleichen, miteinander kommunizieren, d.h. Informationen und Daten austauschen, können. Hierbei hat sich das Internet Protocol (IP) als Standardprotokoll zur Bewerkstelligung von Kommunikationsvorgängen in Rechner- und Telekommunikationsnetzwerken durchgesetzt. IP ist ein verbindungsloses Protokoll, für dessen Nutzung und Adressierung zurzeit die beiden Standards IPv4 und IPv6 Verwendung finden. Aufgrund der stark ansteigenden Nutzung von Telekommunikationsnetzwerken und des dadurch ständig steigenden Bedarfs an IP Adressen handelt es sich bei diesen IP Adressen um eine knappe Ressource, so dass eine effiziente Verteilung der IP Adressen unabdingbar ist.

Um die einzelnen Endgeräte in solche Netzwerke einzubinden sind entsprechende Dienstanbieter, wie beispielsweise Internet Service Provider oder Telekommunikationsanbieter, notwendig, welche einerseits ihren Kunden einen entsprechenden physikalischen Netzzugang bereitstellen und andererseits den Endgeräten ihrer Kunden eine Adresse zuweisen, damit diese aus den Netzwerken heraus adressierbar sind, d.h. Inhalte bzw. Dienste und die dazugehörigen Daten aus dem Netzwerk empfangen können. Eine solche Adresse wird den Endgeräten dabei entweder dauerhaft oder nur temporär zugewiesen. Dem entsprechenden Dienstanbieter steht dabei in der Regel ein bestimmter Pool an Adressen zur Verfügung, die der Dienstanbieter den Endgeräten seiner Kunden zuweisen kann. Beispielsweise wird einem Endgerät eine bestimmte Adresse aus dem Adresspool durch den Dienstanbieter zugewiesen, sobald das Endgerät eine Verbindung in das Netzwerk anfordert. Nach dem Ende der Nutzung, beispielsweise nach dem Abbau der Verbindung bzw. nach einem Timeout wird diese Adresse zurückgegeben und kann beispielsweise für Endgeräte anderer Kunden wiederverwendet werden. Die Druckschrift DE 102 60 296 A1 schlägt beispielsweise ein Verfahren zur Vergabe von IP Adressen anhand entsprechender Prioritätskriterien vor, wodurch eine dynamische und somit effiziente Nutzung der zur Verfügung stehenden IP Adressen erzielt werden soll.

Ähnliche Konzepte sind aus den Druckschriften US 6 988 148 B1, EP 1 178 643 A1 sowie US 7 788 345 B1 bekannt. Die aktuellen Netzarchitekturen der Rechner- und Telekommunikationsnetze sehen dabei dezentralisierte Servicecreationsysteme (auch als dezentrale Dienstanbieter bezeichnet) für IP Konnektivität von Massenmarktkunden vor. Dabei erfolgt die Vergabe (z.B. Einwahl des Kunden oder IP Adressparameteranforderung) und Rückgabe von IP Adressparametern nach Bedarf (z.B. Beendigung der Konnektivität oder Rückgabe der IP Adressparameter). Es besteht keine statische Beziehung zwischen einem Kunde bzw. Netzteilnehmer und spezifischer Adressparameter. Den Netzteilnehmern werden daher jeweils verschiedene spezifische Adressparameter zugewiesen. Den dezentralen Servicecreationsystemen sind jeweils dezentrale Adresspools zugewiesen. Kunden deren IP Servicecreation an einem dezentralen System erfolgt, erhalten ihre IP Adressparameter ausschließlich aus den dem dezentralen System zugewiesenen Adresspools. Dabei können für verschiedene Kundengruppen, jeweils verschiedene Adresspools verwendet werden. Die Größe der Kundengruppen bzw. Adresspools kann unterschiedlich sein. Durch Umbaumaßnahmen im Aggregationsnetz (entspricht dem Netz zwischen Kunde und IP Servicecreation), der Gewinnung von Neukunden, unterschiedlichen Kundenverhalten und Veränderungen von Kundenbeziehungen (Kündigung, Produktänderungen etc.) kann es auch bei einer für einen Serviceprovider konstanten Anzahl von Kunden regional zu unterschiedlichen Auslastungen der den dezentralen Systemen zugeordneten Adresspools kommen. Wegen der vielen Parameter und deren teilweise schlechten Prognostizierbarkeit, lässt sich auch die Zukunft der Auslastung der Adresspools der dezentralen Systeme sehr schlecht prognostizieren bzw. Handlungsempfehlungen für die Planung ableiten. Bei einigen dezentralen Adresspools kann es hierdurch zu Engpässen kommen, während andere Adresspools nicht ausgelastet sind. Um allen Netzteilnehmern eines Dienstanbieters stets volle Konnektivität zusichern zu können, muss vermieden werden, dass einem Netzteilnehmer, der die Zuweisung einer Adresse anfordert, aufgrund eines Mangels an noch verfügbaren Adressen im dezentralen Adresspool keine Adresse zugewiesen werden kann und er infolgedessen keine Verbindung zum Netzwerk aufbauen kann.

Zur Lösung dieses Problems müsste die Größe der dezentralen Adresspools stets an die zu erwartende Anzahl angeforderter Adressen optimal angepasst werden. Hierfür wären komplizierte Berechnungen der zukünftig zu erwartenden Auslastung auf Grundlage einer ständigen Überwachung der Auslastung der dezentralen Adresspools, der einem Dienstanbieter zugeordneten Netzteilnehmeranzahl, der zu erwartenden Teilnehmerfluktuation und dergleichen notwendig. Ferner wäre die Genauigkeit einer solchen Prognostizierung vergleichsweise gering, so dass durch eine Anpassung der Adresspoolgröße allein nicht gänzlich verhindert werden könnte, dass zumindest zeitweise einige der dezentralen Adresspools überlastet sind, während andere der dezentralen Adresspools nicht ausgelastet sind.

### Offenbarung der Erfindung

Der Erfindung liegt daher die Aufgabe zu Grunde ein Telekommunikationssystem und ein Verfahren zur Bereitstellung von Diensten in einem Telekommunikationsnetzwerk zur Verfügung zu stellen, bei welchen einem Dienstanbieter stets genügend Adressen zur Zuordnung an seine Netzteilnehmer zur Verfügung stehen, ohne dass hierfür die dezentralen Adresspools unverhältnismäßig groß sein müssen oder deren Größe ständig mittels komplizierter Rechenmodelle angepasst werden müssen.

Diese Aufgabe wird erfindungsgemäß durch ein Telekommunikationssystem zum Bereitstellen von Diensten in einem Telekommunikationsnetzwerk gelöst, welches wenigstens eine in das Telekommunikationsnetzwerk eingebundene Dienstanbietereinheit, jeweils mit der Dienstanbietereinheit gekoppelte erste und zweite Netzteilnehmereinheiten und eine der Dienstanbietereinheit zugeordnete dezentrale Adresspoolverwaltung aufweist, wobei die Dienstanbietereinheit zur Zuweisung einer von der dezentralen Adresspoolverwaltung bereitgestellten ersten Adresse zur ersten Netzteilnehmereinheit konfiguriert ist, und wobei das Telekommunikationssystem ferner eine mit einer Mehrzahl von Dienstanbietereinheiten verbundene zentrale Adresspolverwaltung aufweist und die Dienstanbietereinheit zur Zuweisung einer von der zentralen Adresspoolverwaltung bereitgestellten zweiten Adresse zur zweiten Netzteilnehmereinheit konfiguriert ist.

In vorteilhafter Weise weist das erfindungsgemäße Telekommunikationssystem neben der dezentralen Adresspoolverwaltung noch eine zentrale Adresspoolverwaltung auf, aus welcher die Dienstanbietereinheit (und insbesondere jede der Mehrzahl von Dienstanbietereinheiten) zusätzliche Adressen (hier wenigstens die zweite Adresse) beziehen können, wenn alle Adressen (hier die ersten Adressen) in den der Dienstanbietereinheit zugewiesenen dezentralen Adresspools bereits schon vergeben worden sind. Es handelt sich bei der zentralen Adresspoolverwaltung somit um eine Art Notfallsystem, welches nur dann temporär verwendet wird, wenn alle ersten Adressen im dezentralen Adresspool aufgebraucht wurden und der Dienstanbieter dennoch neue Anfragen zur Adressvergabe von seinen Netzteilnehmern empfängt. Die Dienstanbietereinheit ist dann in der Lage, zumindest temporär zweite Adressen aus dem zentralen Adresspool zu beziehen und seinen Netzteilnehmern zuzuordnen. Hierfür wird eine bestimmte Anzahl von Adressen im zentralen Adresspool vorgehalten. Auf diese Weise kann eine optimale Nutzung der insgesamt verfügbaren Adressen erzielt werden, ohne dass hierfür die Größe der dezentralen Adresspools ständig optimiert werden müsste. Insbesondere wird somit verhindert, dass bestimmte dezentralen Adresspools kurzzeitig völlig überlastet sind, während andere dezentrale Adresspools nicht ausgelastet sind und noch eine Vielzahl von zu vergebenden Adressen haben, welche von den überlasteten Adresspools aber nicht genutzt werden können (insbesondere können somit niemals alle zu vergebenden Adressen genutzt werden). Theoretisch ist mit dem erfindungsgemäßen Telekommunikationsnetzwerk sogar eine Nutzung aller verfügbaren Adressen denkbar. Die Anpassungen der Größe der dezentralen Adresspools können dann weniger häufig und großgliedriger erfolgen. Das Risiko, dass Kunden bzw. Netzteilnehmer keine Adressen zugewiesen werden können, wird erheblich minimiert. Für einen Fachmann ist selbstverständlich, dass das Telekommunikationssystem in der Praxis eine Vielzahl von mit der Dienstanbietereinheit verbundenen ersten Netzteilnehmern aufweist, welchen auf Anfrage von der Dienstanbietereinheit jeweils unterschiedliche erste Adressen aus dem dezentralen Adresspool zugewiesen wurden. Die Dienstanbietereinheit umfasst vorzugsweise einen auf einem dezentralen Router bzw. Network Access Server befindlichen (Internet) Service Provider Dienst. Der dezentrale Adresspool befindet sich vorzugsweise ebenfalls auf diesem Router bzw. Network Access Server. Alternativ ist denkbar, dass die dezentrale Adresspoolverwaltung auf einer eigenen und von der Dienstanbietereinheit räumlich getrennten Plattform realisiert ist. Denkbar ist aber auch, dass eine zentral angeordnete Datenbank mit einer Vielzahl von zu vergebenden Adressen realisiert ist, wobei ein Teil dieser Adressen für die Dienstanbietereinheit reserviert bzw. der Dienstanbietereinheit fest zugewiesen ist und somit den dezentralen Adresspool bilden.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass die Dienstanbietereinheit und/oder die dezentrale Adresspoolverwaltung derart konfiguriert ist, dass die zweite Adresse von der zentralen Adresspoolverwaltung nur dann angefordert wird, wenn alle durch die dezentrale Adresspoolverwaltung zu vergebenden Adressen schon vergeben sind. Auf diese Weise wird sichergestellt, dass nur wenn alle durch die dezentrale Adresspoolverwaltung unmittelbar zu vergebenden ersten Adressen aufgebraucht sind, eine Anfrage nach zweiten Adressen an die zentrale Adresspoolverwaltung gesendet wird.

Gemäß einer bevorzugten Ausführungsform der vorliegenden Erfindung ist vorgesehen, dass das Telekommunikationssystem eine zentrale Gateway-Einheit aufweist, welche mit der Dienstanbietereinheit und mit dem Telekommunikationsnetzwerk verbunden ist, wobei die zentrale Gateway-Einheit zur Leitung des der zweiten Adresse zugeordneten Datenflusses zwischen der zweiten Netzteilnehmereinheit und dem Telekommunikationsnetzwerk über die Dienstanbietereinheit konfiguriert ist. In vorteilhafter Weise wird der Datenverkehr zwischen dem Telekommunikationsnetzwerk und der zweiten Netzteilnehmereinheit über die zentrale Gateway-Einheit geleitet. Hierdurch ist insbesondere eine Aggregation der Adressen möglich. Denkbar ist, dass der Verkehr zwischen der zentralen Gateway-Einheit und der Dienstanbietereinheit über eine unmittelbare Verbindung zwischen der zentralen Gateway-Einheit und der Dienstanbietereinheit erfolgt oder über das Telekommunikationsnetzwerk, wobei in diesem Fall vorzugsweise eine Entkopplung vom übrigen Verkehr, beispielsweise mittels Tunnelmechanismen und VPN (Virtual Private Network), erfolgt.

Gemäß einer bevorzugten Ausführungsform der vorliegenden Erfindung ist vorgesehen, dass das Telekommunikationssystem wenigstens eine in das Telekommunikationsnetzwerk eingebundene weitere Dienstanbietereinheit, jeweils mit der weiteren Dienstanbietereinheit gekoppelte weitere erste und weitere zweite Netzteilnehmereinheiten und eine der weiteren Dienstanbietereinheit zugeordnete weitere dezentrale Adresspoolverwaltung aufweist, wobei die weitere Dienstanbietereinheit zur Zuweisung einer von der weiteren dezentralen Adresspoolverwaltung bereitgestellten weiteren ersten Adresse zur weiteren ersten Netzteilnehmereinheit konfiguriert ist und wobei die weitere Dienstanbietereinheit ferner zur Zuweisung einer von der zentralen Adresspoolverwaltung bereitgestellten weiteren zweiten Adresse zur weiteren zweiten Netzteilnehmereinheit konfiguriert ist. In vorteilhafter Weise ist die zentrale Adresspoolverwaltung, im Unterschied zu den dezentralen Adresspoolverwaltungen, somit in der Lage Adressen (hier: die zweite und weitere zweite Adresse) an mehrere verschiedene Dienstanbietereinheiten zu vergeben. Somit kann die Adressvergabe in Abhängigkeit der jeweiligen Auslastung der dezentralen Adresspools erfolgen.

Gemäß einer bevorzugten Ausführungsform der vorliegenden Erfindung ist vorgesehen, dass die zentrale Gateway-Einheit mit der weiteren Dienstanbietereinheit verbunden ist und wobei die zentrale Gateway-Einheit zur Leitung des der weiteren zweiten Adresse zugeordneten Datenflusses zwischen der weiteren zweiten Netzteilnehmereinheit und dem Telekommunikationsnetzwerk über die weitere Dienstanbietereinheit konfiguriert ist. Vorteilhafterweise wird der zentralen Gateway-Einheit eine Steuerinformation durch den zentralen Adresspool zur Verfügung gestellt, welche die zentrale Gateway-Einheit darüber informiert, an welche Dienstanbietereinheit eine bestimmte Adresse zeitweise vergeben wurde, so dass die zentrale Gateway-Einheit den dieser Adresse zugeordneten Datenverkehr über die entsprechende Dienstanbietereinheit leiten kann.

Ein weiterer Gegenstand der vorliegenden Erfindung ist ein Verfahren zum Bereitstellen von Diensten in einem Telekommunikationsnetzwerk mit den folgenden Schritten: Bereitstellen einer ersten Adresse von einer dezentralen Adresspoolverwaltung im ersten Schritt, wobei die dezentrale Adresspoolverwaltung einer in ein Telekommunikationsnetzwerk eingebundenen Dienstanbietereinheit zugeordnet ist; Zuordnen der ersten Adresse zu einer mit der Dienstanbietereinheit gekoppelten ersten Netzteilnehmereinheit mittels der Dienstanbietereinheit im zweiten Schritt; Bereitstellen einer zweiten Adresse von einer mit einer Mehrzahl von Dienstanbietereinheiten verbundenen zentralen Adresspoolverwaltung im dritten Schritt; und Zuordnen der zweiten Adresse zu einer mit der Dienstanbietereinheit gekoppelten zweiten Netzteilnehmereinheit mittels der Dienstanbietereinheit im vierten Schritt.

In vorteilhafter Weise ist somit eine temporäre Zuordnung von zweiten Adressen aus dem zentralen Adresspool zu Netzteilnehmereinheiten der Dienstanbietereinheit möglich, so dass stets alle Verbindungsanfragen der Netzteilnehmereinheit durch die Dienstanbietereinheit bedient werden können, auch wenn alle durch den dezentralen Adresspool zu vergebenden Adresse bereits vergeben wurden. Die Zuverlässigkeit des Telekommunikationssystems, sowie die Effizienz bei der Adressvergabe werden somit erheblich gesteigert.

Gemäß einer bevorzugten Ausführungsform der vorliegenden Erfindung ist vorgesehen, dass im ersten Schritt die Zuordnung der ersten Adresse bei der Dienstanbietereinheit durch die erste Netzteilnehmereinheit angefragt wird, die Bereitstellung der ersten Adresse bei der dezentralen Adresspoolverwaltung durch die Dienstanbietereinheit angefordert wird und infolge der Anforderung die erste Adresse von der dezentralen Adresspoolverwaltung bereitgestellt wird, sofern die dezentrale Adresspoolverwaltung noch über bereitzustellende Adressen verfügt. Ferner ist vorgesehen, dass im dritten Schritt die Zuordnung der zweiten Adresse bei der Dienstanbietereinheit durch die zweite Netzteilnehmereinheit angefragt wird, die Bereitstellung der zweiten Adresse bei der dezentralen Adresspoolverwaltung durch die Dienstanbietereinheit angefordert wird, die Aufforderung zur Bereitstellung der zweiten Adresse an die zentrale Adresspoolverwaltung weitergeleitet wird, wenn alle durch die dezentrale Adresspoolverwaltung zu vergebenden Adressen schon vergeben sind, und infolge der Anforderung die zweite Adresse von der zentralen Adresspoolverwaltung bereitgestellt wird. Auf diese Weise wird sichergestellt, dass nur wenn alle durch die dezentrale Adresspoolverwaltung unmittelbar zu vergebenden ersten Adressen aufgebraucht sind, eine Vergabe von zweiten Adressen aus der zentralen Adresspoolverwaltung durchgeführt wird.

Gemäß einer bevorzugten Ausführungsform der vorliegenden Erfindung ist vorgesehen, dass in einem fünften Schritt ein der zweiten Adresse zugeordneter Datenfluss zwischen dem Telekommunikationsnetzwerk und der zweiten Netzteilnehmereinheit mittels einer zentralen Gateway-Einheit über die Dienstanbietereinheit geleitet wird. Vorzugsweise wird hierzu eine Steuerungsinformation an die zentrale Gateway-Einheit, insbesondere im dritten oder vierten Schritt, gesendet, mittels welcher der zentralen Gateway-Einheit die temporäre Nutzung der zweiten Adresse durch die Dienstanbietereinheit signalisiert wird, und wobei im fünften Verfahrensschritt die zentrale Gateway-Einheit in Abhängigkeit der Steuerungsinformation den der zweiten Adresse zugeordneten Datenfluss über die Dienstanbietereinheit leitet. Die Steuerungsinformation wird dabei insbesondere von der zentralen Adresspoolverwaltung, der dezentralen Adresspoolverwaltung und/oder der Dienstanbietereinheit an die zentrale Gateway-Einheit gesendet. Vorteilhafterweise wird die zentrale Gateway-Einheit mittels der Steuerinformation darüber informiert, an welche Dienstanbietereinheit eine bestimmte Adresse aus der zentralen Adresspoolverwaltung zeitweise vergeben wurde, so dass die zentrale Gateway-Einheit den dieser Adresse zugeordneten Datenverkehr über die entsprechende Dienstanbietereinheit leiten kann.

Gemäß einer bevorzugten Ausführungsform der vorliegenden Erfindung ist vorgesehen, dass das Verfahren ferner die folgenden Schritte aufweist: Bereitstellen einer weitere ersten Adresse von einer weiteren dezentralen Adresspoolverwaltung, wobei die weitere dezentrale Adresspoolverwaltung einer in das Telekommunikationsnetzwerk eingebundenen weiteren Dienstanbietereinheit zugeordnet ist; Zuordnen der weiteren ersten Adresse zu einer mit der weiteren Dienstanbietereinheit gekoppelten weiteren ersten Netzteilnehmereinheit mittels der weiteren Dienstanbietereinheit; Bereitstellen einer weiteren zweiten Adresse von der zentralen Adresspoolverwaltung und Zuordnen der weiteren zweiten Adresse zu einer mit der weiteren Dienstanbietereinheit gekoppelten weiteren zweiten Netzteilnehmereinheit mittels der weiteren Dienstanbietereinheit. Die zentrale Adresspoolverwaltung ist, im Unterschied zu den dezentralen Adresspoolverwaltungen, somit in der Lage Adressen (hier: die zweite und weitere zweite Adresse) an mehrere verschiedene Dienstanbietereinheiten zu vergeben. Somit kann die Adressvergabe in Abhängigkeit der jeweiligen Auslastung der dezentralen Adresspools erfolgen.

Gemäß einer bevorzugten Ausführungsform der vorliegenden Erfindung ist vorgesehen, dass die Zuordnung der weiteren zweiten Adresse bei der weiteren Dienstanbietereinheit durch die weitere zweite Netzteilnehmereinheit angefragt wird, wobei die Bereitstellung der weiteren zweiten Adresse bei der weiteren dezentralen Adresspoolverwaltung durch die weitere Dienstanbietereinheit angefordert wird, wobei die Aufforderung zur Bereitstellung der weiteren zweiten Adresse an die zentrale Adresspoolverwaltung weitergeleitet wird, wenn alle durch die weitere dezentrale Adresspoolverwaltung zu vergebenden Adressen schon vergeben sind, und infolge der Anforderung die weitere zweite Adresse von der weiteren Adresspoolverwaltung bereitgestellt wird. Die Dienstanbietereinheit und die weitere Dienstanbietereinheit sind somit vorzugsweise analog aufgebaut.

Gemäß einer bevorzugten Ausführungsform der vorliegenden Erfindung ist vorgesehen, dass ein der weiteren zweiten Adresse zugeordneter Datenfluss zwischen dem Telekommunikationsnetzwerk und der weiteren zweiten Netzteilnehmereinheit mittels der zentralen Gateway-Einheit und insbesondere in Abhängigkeit einer weiteren Steuerinformation über die weitere Dienstanbietereinheit geleitet wird.

Gemäß einer bevorzugten Ausführungsform der vorliegenden Erfindung ist vorgesehen, dass die Anzahl der von der dezentralen Adresspoolverwaltung zu vergebenden ersten Adressen auf null reduziert wird. Dies hat den Vorteil, dass den anfragenden Netzteilnehmereinheiten keine (ersten) Adressen aus der dezentralen Adresspoolverwaltung zugeordnet werden können und der ersten anfragenden Netzteilnehmereinheit bereits eine (zweite) Adresse aus der zentralen Adresspoolverwaltung zugeordnet wird. Auf dieser Weise kann der dieser Netzteilnehmereinheit bzw. der vergebenden (zweiten) Adressen zugeordneter Datenfluss durch die zentrale Gateway-Einheit analysiert und gegebenenfalls aktiv beeinflusst werden. Beispielsweise ist denkbar, dass die dem Netzteilnehmer zugeordnete Datenmenge überwacht wird und sobald ein bestimmter Schwellwert überschritten wird, die Bandbreite für diesen Netzteilnehmer reduziert wird.

Ein weiterer Gegenstand der vorliegenden Erfindung ist ein Computerprogramm mit Programmcodemitteln, mit deren Hilfe alle Schritte des erfindungsgemäßen Verfahrensdurchführbar sind, wenn das Computerprogramm auf einem Computer oder einer entsprechenden Recheneinheit, insbesondere in einem erfindungsgemäßen Telekommunikationssystem ausgeführt wird.

Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einem Computer oder einer entsprechenden Recheneinheit, insbesondere in einem erfindungsgemäßen Telekommunikationssystem ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche durch die beigefügten Ansprüche dargelegt wird.

Kurze Beschreibung der Zeichnungen
- **Figur 1**: zeigt eine schematische Ansicht eines Telekommunikationssystems gemäß dem Stand der Technik.
- **Figur 2**: zeigt eine schematische Ansicht eines Telekommunikationssystems gemäß einer beispielhaften Ausführungsform der vorliegenden Erfindung

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

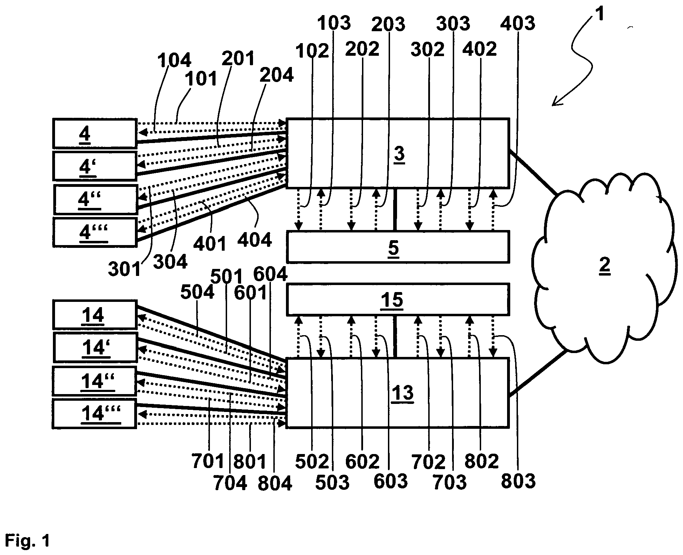

In **Figur 1** ist eine schematische Ansicht eines Telekommunikationssystems 1 gemäß dem Stand der Technik dargestellt. Die Abbildung betrifft insbesondere die Anbindung eines überregionalen Netzwerks 2 an verschiedene Kunden bzw. Netzteilnehmereinheiten 4, 4', 4", 4"', 14, 14', 14", 14'" mittels dezentraler Servicecreationssystemen bzw. Dienstanbietereinheiten 3, 13.

Große Telekommunikationsanbieter bedienen verschiedene Kundengruppen üblicherweise mit ähnlichen Diensten. Kunden einer Kundengruppe können bzw. müssen wegen der Begrenzungen der maximalen Anzahl von Kunden auf einem Servicecreationssystem 3, 13 oder Gegebenheiten bei der regionalen Vernetzung auf verschiedenen dezentralen Servicecreationsystemen 3, 13 bedient werden. Durch Umbaumaßnahmen im Netz zwischen dem dezentralen Servicecreationsystem 3, 13 und dem Kundenabschluss 4, 4', 4", 4"', 14, 14', 14", 14'" oder durch Ortswechsel des Kunden 4, 4', 4", 4"', 14, 14', 14", 14'" kann sich die Zuordnung zu einem dezentralen Servicecreationsystem 3, 13 ändern.

Im vorliegenden Beispiel sind der Einfachheit halber nur Kunden bzw. Netzteilnehmereinheiten 4, 4', 4", 4"', 14, 14', 14", 14'" einer ersten Kundenspezifikation dargestellt. Diese unterteilen sich in ihrer Zuordnung zu einem ersten dezentralen Servicecreationsystem 3 (auch als Dienstanbietereinheit 13 bezeichnet) und einem zweiten dezentralen Servicecreationsystem 13. Die Netzteilnehmereinheiten 4, 4', 4", 4'" sind vorliegend der Dienstanbietereinheit 3 und die weiteren Netzteilnehmereinheiten 14, 14', 14", 14'" der weiteren Dienstanbietereinheit 13 beispielhaft zugeordnet.

Für jede dieser Gruppen stehen über die dezentralen Servicecreationsysteme 3, 13 Adresspools 5, 15 (entspricht der Adresspoolverwaltung 5 und der weiteren Adresspoolverwaltung 15) unterschiedlicher Größe zur Verfügung (Erste Gruppe 4, 4', 4", 4'" - dezentrales Servicecreationsystem 3 - Adresspool 5 mit Größe A; Zweite Gruppe 14, 14', 14", 14'" - dezentrales Servicecreationsystem 13 - Adresspool 15 mit Größe B). Solange die Anzahl der Kunden die gleichzeitig einen Adressbedarf haben und dieser Adressbedarf kleiner als die zugeordnete Adresspoolgröße ist, ergeben sich keine Probleme. Bei der vereinfachten Annahme, dass jeder aktive Kunde genau eine Adresse benötigt ergibt sich folgende Situation.

### Erste Gruppe:

Es kann nur eine Anzahl A Kunden mit Adressbedarf gleichzeitig bedient werden und Adressen zugewiesen werden.

Ein erster Kunde 4 signalisiert seinen Adressbedarf zur dezentralen Servicecreation 3 (Meldung 101). Diese erfragt bei der Adresspoolverwaltung 5 der ersten Kundengruppe eine Adresse (Meldung 102) und bekommt eine Adresse zugewiesen (Meldung 103). Diese Adresse kann ggf. zusammen mit anderen Parametern dem Kunden 4 zugewiesen werden (Meldung 104).

Analog erfolgt die Adresszuweisung für alle Kunden 4' bis die Anzahl der Kunden mit Adressbedarf die Anzahl A erreicht hat (Beispielsweise 201, 202, 203 und 204).

Wenn nun der Kunde A+1 (Netzteilnehmereinheit 4") einen Adressbedarf zur dezentralen Servicecreation 3 signalisiert (Meldung 301), erfolgt anschließend ebenfalls eine Anfrage der Adresspoolverwaltung 5 der ersten Kundengruppe (Meldung 302). Hier wird nun die Erschöpfung des Adresspools festgestellt. Es kann keine Adresse zugewiesen werden (Meldung 303). Der Kunde kann von der dezentralen Servicecreation 3 keine Adresse zugewiesen bekommen (Meldung 304).

Wenn weitere Kunden (A+a) (Netzteilnehmereinheit 4"') Adressbedarf signalisieren, kann diesen analog ebenfalls keine Adresse zugewiesen werden (Meldung 401, 402, 403 und 404).

### Zweite Gruppe:

Da hier die Anzahl der Kunden 14, 14', 14", 14'" mit Adressbedarf B-x (x > 1) kleiner als die Anzahl der Adressen ist entsteht hier keine Adressknappheit. Allen Kunden kann bei Bedarf eine Adresse zugewiesen werden. Die Anzahl x (x < 1) der Adressen bleibt ungenutzt.

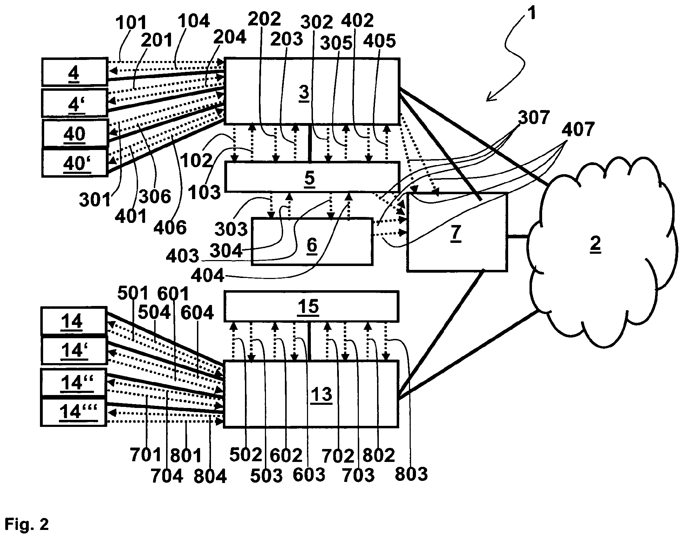

Damit ergibt sich eine suboptimale Verteilung der Adressen für die erste Kundengruppe 4, 4', 4", 4"'. Bei der ersten Kundengruppe 4, 4', 4", 4'" kann es zu Adressengpässen kommen, so dass der Adressbedarf dieser Kunden nicht gedeckt werden kann. Bei der zweiten Kundengruppe 14, 14', 14", 14'" besteht hingegen ein Überschuss an Adressen. Zur Lösung dieses Problems wird nachfolgend das anhand der Figur 2 illustrierte erfindungsgemäße Telekommunikationssystem 1 und Verfahren zum Bereitstellen von Diensten in einem Telekommunikationsnetzwerk 2 erläutert.

In **Figur 2** ist eine schematische Ansicht eines Telekommunikationssystems 1 gemäß einer beispielhaften Ausführungsform der vorliegenden Erfindung dargestellt.

Das erfindungsgemäße Telekommunikationssystem 1 umfasst eine Mehrzahl von Netzteilnehmereinheiten 4, 4, 40, 40' (erste Gruppe), welche einer mit dem Telekommunikationsnetzwerk 2 verbundenen dezentralen Dienstanbietereinheit 3 zugeordnet sind. Dieser dezentralen Dienstanbietereinheit 3 ist wiederum eine dezentrale Adresspoolverwaltung 5 fest zugeordnet, dessen Adressen den Netzteilnehmereinheiten 4, 40 von der Dienstanbietereinheit 3 zugeordnet werden, wenn seitens der Netzteilnehmereinheiten 4, 40 eine Kommunikation über das Telekommunikationsnetzwerk 2 aufgebaut werden soll. Analog weist das Telekommunikationssystem 1 eine Mehrzahl weiterer Netzteilnehmereinheiten 14, 14', 14", 14'" (zweite Gruppe), welche einer mit dem Telekommunikationsnetzwerk 2 verbundenen weiteren dezentralen Dienstanbietereinheit 13 zugeordnet sind, wobei dieser weiteren dezentralen Dienstanbietereinheit 13 in analoger Weise eine weitere dezentrale Adresspoolverwaltung 15 fest zugeordnet ist.

Gegenüber dem in Figur 1 illustrierten Stand der Technik weist das erfindungsgemäße Telekommunikationssystem 1 ferner eine zentrale Adresspoolverwaltung 6 und ein zentrales Routinggateway 7 als zusätzliche Elemente bzw. Funktionen mit Schnittstellen zu den bisher existierenden Systemen auf. Es handelt sich also um eine Mischlösung aus dezentraler und zentraler Adresspoolverwaltung 5, 15, 6, wobei die konkrete Adressvergabe entsprechend des Adressbedarfs und der Auslastung der dezentralen Adresspools 5, 15 erfolgt. Solange dezentrale Adressressourcen zur Verfügung stehen, werden die angeforderte Adressvergabe an die Kunden bzw. Netzteilnehmereinheiten 4, 4', 14, 14', 14", 14'" lediglich aus dem jeweiligen dezentralen Adresspool 5, 15 bedient. Der zentrale Adresspool 6 wird somit nur als Überlauffunktion genutzt.

Der zentrale Adresspool 6 kann bei Bedarf von der der Dienstanbietereinheit 3 (auch als Servicecreationssystem 3 bezeichnet) angegliederten dezentralen Adresspoolverwaltung 5, sowie von der der weiteren Dienstanbietereinheit 13 (auch als Servicecreationssystem 13 bezeichnet) angegliederten weiteren dezentralen Adresspoolverwaltung 15 angesprochen werden. Der bidirektionale Kommunikationsfluss zwischen dem überregionalen Netzwerk 2 und Kunden 40, 40', denen Adressen aus dem zentralen Adresspool 6 zugeordnet wurden erfolgt immer über das zentrale Routinggateway 7. Damit ist eine Aggregation von Adressen möglich. Die hierfür notwendige Steuerung kann zwischen der zentralen Adresspoolverwaltung 6 und dem zentralen Routinggateway 7 und/oder der dezentralen Adresspoolverwaltung 5, 15 und dem zentralen Routinggateway 7 und/oder dem dezentralen Servicecreationsystem 3, 13 und dem zentralen Routinggateway 7 bzw. der zentralen Adresspoolverwaltung 6 und dem dezentralen Servicecreationsystem 3, 13 über die dezentrale Adresspoolverwaltung 5, 15 erfolgen.

Damit stehen Kunden 4, 4', 40, 40', 14, 14', 14", 14'" einer Kundenspezifikation zusätzlich zu den dezentralen Adresspools 5, 15 auch Adressen des zentralen Adresspools 6 zur Verfügung. Durch Verknappung der dezentralen Adresspools 5, 15 zugunsten des zentralen Adresspools 6 kann die Gesamtauslastung der zur Verfügung stehenden Adressen erhöht werden. Theoretisch ist so eine Gesamtauslastung der zentralen und dezentralen Adresspools 5, 15, 6 von annähernd 100 Prozent möglich.

Nachfolgend wird die Funktion des in Figur 2 illustrierten Telekommunikationssystems 1, sowie des Verfahrens zum Bereitstellung von Diensten näher erläutert: Funktionsbeschreibung der Erfindung:
Erste Gruppe 4, 4', 40, 40":
Bei der auch hier (wie in Figur 1) geltenden Annahme, dass je aktivem Kunde (Netzteilnehmereinheiten 4, 4', 40, 40') mit Adressbedarf genau eine Adresse benötigt wird, können bei einer dem dezentralen Servicecreationsystem 3 zugeordneten Adresspool 5 der Adresspoolgröße A zunächst eine Anzahl von A Kunden 4, 4' (erste Netzteilnehmereinheiten 4, 4') aus dem dezentralen Adresspool bedient werden.

Kunde 4 signalisiert seinen Adressbedarf zur dezentralen Servicecreation 3 (Meldung 101). Diese erfragt bei der Adresspoolverwaltung 5 der ersten Kundengruppe 4, 4', 40, 40' eine Adresse (Meldung 102) und bekommt eine Adresse zugewiesen (Meldung 103). Diese Adresse kann ggf. zusammen mit anderen Parametern Kunden 4 zugewiesen werden (Meldung 104).

Analog erfolgt die Adresszuweisung für alle Kunden 4' bis die Anzahl der Kunden 4, 4' mit Adressbedarf die Anzahl A erreicht hat (Meldung 201, 202, 203 und 204).

Wenn nun der Kunde A+1, hier Netzteilnehmereinheit 40, einen Adressbedarf zur dezentralen Servicecreation 3 signalisiert (Meldung 301), erfolgt anschließend ebenfalls eine Anfrage der dezentralen Adresspoolverwaltung 5 der ersten Kundengruppe 4, 4', 40, 40' (Meldung 302). Hier wird nun die Erschöpfung des dezentralen Adresspools 5 festgestellt. Es kann keine Adresse aus dem dezentralen Adresspool 5 zugewiesen werden. Die dezentrale Adresspoolverwaltung 5 fragt nun den zentralen Adresspool 6 nach einer freien Adresse für Kunden 40 der Kundegruppe 4, 4', 40, 40' an (Meldung 303). Der zentrale Adresspool 6 weist eine freie Adresse zu und signalisiert dies zur dezentralen Adresspoolverwaltung 5 (Meldung 304). Diese leitet die Adresse zum dezentralen Servicecreationsystem 3 weiter (Meldung 305). Das dezentrale Servicecreationsystem 3 weist diese Adresse ggf. zusammen mit anderen Parametern Kunden A+1, hier Netzteilnehmereinheit 40, zu (Meldung 306). Parallel dazu kann von der zentralen Adresspoolverwaltung 6 und/oder der dezentralen Adresspoolverwaltung 5 und/oder der dezentralen Servicecreation 3 eine Steuerungsinformation an das zentrale Routinggateway 7 gesendet werden (Meldung 307). Damit wird das zentrale Routinggateway 7 über die temporäre Nutzung der Adresse vom dezentralen Servicecreationsystem 3 informiert und der Datenfluss durch das Telekommunikationsnetzwerk 2 von und zu der Adresse aus dem zentralen Adresspool 6 zwischen Kunden 40 und dem zentralen Routinggateway 7 via dem dezentralen Servicecreationsystem 3 konfiguriert.

Wenn weitere Kunden (A+α), hier Netzteilnehmereinheit 40', Adressbedarf signalisieren, kann diesen ebenfalls keine Adresse aus dem dezentralen Adresspool 5 zugewiesen werden und es wird in analoger Weise eine Adresse aus dem zentralen Adresspool 6 vergeben werden (Meldung 401 bis 406).

Zweite Gruppe 14, 14', 14", 14"':
Da hier beispielhaft die Anzahl der Kunden, hier weitere Netzteilnehmereinheiten 14, 14', 14", 14"', mit Adressbedarf B-x (x > 1) genauso groß ist wie die Anzahl der zur Verfügung stehenden Adressen B-x entsteht bei der zweiten Gruppe keine Adressknappheit. Allen Kunden 14, 14', 14", 14'" kann bei Bedarf eine Adresse aus dem dezentralen weiteren Adresspool 15 durch die weitere Dienstanbietereinheit 13 zugewiesen werden.

Sollte hier die Anzahl der Kunden 14, 14', 14", 14'" mit gleichzeitigem Adressbedarf größer als B-x werden, kann dieser Adressbedarf nicht aus dem der zweiten Kundengruppe 14, 14', 14", 14'" dezentral zugeordneten Adresspool 15 (auch als weitere Adresspoolverwaltung 15 bezeichnet) gedeckt werden. Diese Kunden (auch als weitere zweite Netzteilnehmereinheiten bezeichnet) könnten dann ebenfalls mit Adressen aus dem zentralen Adresspool bedient 6 werden. Die Adressvergabe würde dann analog zur Adressvergabe für die Kunden 40, 40' (A+1 bzw. A + α) erfolgen.

Entsprechend müsste parallel dazu von der zentralen Adresspoolverwaltung 6 und/oder der weiteren dezentralen Adresspoolverwaltung 15 und/oder der weiteren dezentralen Servicecreation 13 eine Steuerungsinformation an das zentrale Routinggateway 7 gesendet werden. Damit wird das zentrale Routinggateway 7 über die temporäre Nutzung der Adresse vom weiteren dezentralen Servicecreationsystem 13 informiert und der Datenfluss von und zu der Adresse aus dem zentralen Adresspool 6 zwischen Kunden B-x+1 und dem zentralen Routinggateway 7 via dem weiteren dezentralen Servicecreationsystem 13 konfiguriert.

In einem weiteren Beispiel ist denkbar, dass die Anzahl der von der dezentralen Adresspoolverwaltung 5 zu vergebenden Adressen auf null reduziert wird. Keinem der Netzteilnehmer 4, 4', 40, 40' der ersten Gruppe kann somit eine Adressen aus der dezentralen Adresspoolverwaltung 5 zugeordnet werden, so dass allen Adressen aus der zentralen Adresspoolverwaltung 6 zugeordnet werden und der zugehörigen Datenfluss stets über das zentrale Gateway 7 geleitet wird. Der einer jeden Netzteilnehmereinheit 4, 4', 40, 40' zugeordnete Datenfluss wird dabei vorzugsweise durch die zentrale Gateway-Einheit 7 analysiert und gegebenenfalls aktiv beeinflusst. Beispielsweise ist denkbar, dass die dem Netzteilnehmer zugeordnete Datenmenge überwacht wird und sobald ein bestimmter Schwellwert überschritten wird, die Bandbreite für diesen Netzteilnehmer reduziert wird.

Es versteht sich von selbst, dass das Telekommunikationssystem 1 bezüglich der Anzahl der dezentralen Servicecreationsystemen 3, 13 und zugehöriger dezentraler Adresspoolverwaltungen 5, 15, der Anzahl zentraler Adresspoolverwaltungen 6 und zentraler Routinggateways 7 beliebig erweiterbar ist. Für die Erweiterung der Kommunikation zwischen den bestehenden Systemen sollen die dort bereits verwendeten Protokolle bzw. Signalisierungsflüsse erweitert werden. Für die neu zu entwickelnde Kommunikation zwischen den bestehenden Systemen und den neu einzuführenden Systemen (z.B. zentrales Routinggateway 7 und zentrale Adresspoolverwaltung 6) sollen nach Möglichkeit bereits existierende Protokolle verwendet werden. Bei Bedarf sind diese zu erweitern.

## Patentansprüche

1. Telekommunikationssystem (1) zum Bereitstellen von Diensten in einem Telekommunikationsnetzwerk (2) aufweisend wenigstens eine in das Telekommunikationsnetzwerk (2) eingebundene Dienstanbietereinheit (3), jeweils mit der Dienstanbietereinheit (3) gekoppelte erste und zweite Netzteilnehmereinheiten (4, 40) und eine der Dienstanbietereinheit (3) zugeordnete dezentrale Adresspoolverwaltung (5), wobei die Dienstanbietereinheit (3) zur Zuweisung einer von der dezentralen Adresspoolverwaltung (5) bereitgestellten ersten Adresse zur ersten Netzteilnehmereinheit (4) konfiguriert ist, wobei das Telekommunikationssystem (1) ferner eine mit einer Mehrzahl von Dienstanbietereinheiten (3, 13) verbundene zentrale Adresspoolverwaltung (6) aufweist und die Dienstanbietereinheit (3) zur Zuweisung einer von der zentralen Adresspoolverwaltung (6) bereitgestellten zweiten Adresse zur zweiten Netzteilnehmereinheit (40) konfiguriert ist, wobei die Dienstanbietereinheit (3) und/oder die dezentrale Adresspoolverwaltung (5) derart konfiguriert ist, dass die zweite Adresse von der zentralen Adresspoolverwaltung (6) nur dann angefordert wird, wenn alle durch die dezentrale Adresspoolverwaltung (5) an die zugeordneten Netzteilnehmereinheiten (4, 40) zu vergebenden Adressen schon vergeben sind, **dadurch gekennzeichnet, dass** das Telekommunikationssystem (1) derart konfiguriert ist, dass ein bidirektionaler Kommunikationsfluss zwischen dem Telekommunikationsnetzwerk (2) und den zweiten Netzteilnehmereinheiten (40, 40'), denen Adressen aus der zentralen Adresspoolverwaltung (6) zugeordnet wurden, immer über eine zentrale Gateway-Einheit (7) des Telekommunikationssystems (1) erfolgt.

2. Telekommunikationssystem (1) nach Anspruch 1, wobei das Telekommunikationssystem (1) wenigstens eine in das Telekommunikationsnetzwerk (2) eingebundene weitere Dienstanbietereinheit (13), jeweils mit der weiteren Dienstanbietereinheit (13) gekoppelte weitere erste und weitere zweite Netzteilnehmereinheiten (14) und eine der weiteren Dienstanbietereinheit (13) zugeordnete weitere dezentrale Adresspoolverwaltung (15) aufweist, wobei die weitere Dienstanbietereinheit (13) zur Zuweisung einer von der weiteren dezentralen Adresspoolverwaltung (15) bereitgestellten weiteren ersten Adresse zur weiteren ersten Netzteilnehmereinheit (14) konfiguriert ist und wobei die weitere Dienstanbietereinheit (13) ferner zur Zuweisung einer von der zentralen Adresspoolverwaltung (6) bereitgestellten weiteren zweiten Adresse zur weiteren zweiten Netzteilnehmereinheit konfiguriert ist.

3. Telekommunikationssystem (1) nach einem der vorhergehenden Ansprüche, wobei die zentrale Gateway-Einheit (7) mit der weiteren Dienstanbietereinheit (13) verbunden ist und wobei die zentrale Gateway-Einheit (7) zur Leitung des der weiteren zweiten Adresse zugeordneten Datenflusses zwischen der weiteren zweiten Netzteilnehmereinheit und dem Telekommunikationsnetzwerk (2) über die weitere Dienstanbietereinheit (13) konfiguriert ist.

4. Verfahren zum Bereitstellen von Diensten in einem Telekommunikationsnetzwerk (2) mit den folgenden Schritten:
- Bereitstellen einer ersten Adresse von einer dezentralen Adresspoolverwaltung (5) im ersten Schritt, wobei die dezentrale Adresspoolverwaltung (5) einer in ein Telekommunikationsnetzwerk (2) eingebundenen Dienstanbietereinheit (3) zugeordnet ist;
- Zuordnen der ersten Adresse zu einer mit der Dienstanbietereinheit (3) gekoppelten ersten Netzteilnehmereinheit (4) mittels der Dienstanbietereinheit (3) im zweiten Schritt;
- Bereitstellen einer zweiten Adresse von einer mit einer Mehrzahl von Dienstanbietereinheiten (3, 13) verbundenen zentralen Adresspoolverwaltung (6) im dritten Schritt; und
- Zuordnen der zweiten Adresse zu einer mit der Dienstanbietereinheit (3) gekoppelten zweiten Netzteilnehmereinheit (40) mittels der Dienstanbietereinheit (3) im vierten Schritt, wobei die zweite Adresse durch die Dienstanbietereinheit (3) und/oder durch die dezentrale Adresspoolverwaltung (5) von der zentralen Adresspoolverwaltung (6) nur dann angefordert wird, wenn alle durch die dezentrale Adresspoolverwaltung (5) an die zugeordneten Netzteilnehmereinheiten (4, 40) zu vergebenden Adressen schon vergeben sind; und **gekennzeichnet durch**
- Erfolgen eines bidirektionalen Kommunikationsflusses zwischen dem Telekommunikationsnetzwerk (2) und den zweiten Netzteilnehmereinheiten (40, 40'), denen Adressen aus der zentralen Adresspoolverwaltung (6) zugeordnet wurden, immer über eine zentrale Gateway-Einheit (7) des Telekommunikationssystems (1).

5. Verfahren nach Anspruch 4, wobei im ersten Schritt die Zuordnung der ersten Adresse bei der Dienstanbietereinheit (3) durch die erste Netzteilnehmereinheit (4) angefragt wird, die Bereitstellung der ersten Adresse bei der dezentralen Adresspoolverwaltung (5) durch die Dienstanbietereinheit (3) angefordert wird und infolge der Anforderung die erste Adresse von der dezentralen Adresspoolverwaltung (5) bereitgestellt wird, sofern die dezentrale Adresspoolverwaltung (5) noch über bereitzustellende Adressen verfügt.

6. Verfahren nach einem der Ansprüche 4 oder 5, wobei im dritten Schritt die Zuordnung der zweiten Adresse bei der Dienstanbietereinheit (3) durch die zweite Netzteilnehmereinheit (40) angefragt wird, die Bereitstellung der zweiten Adresse bei der dezentralen Adresspoolverwaltung (5) durch die Dienstanbietereinheit (3) angefordert wird, die Aufforderung zur Bereitstellung der zweiten Adresse an die zentrale Adresspoolverwaltung (6) weitergeleitet wird, wenn alle durch die dezentrale Adresspoolverwaltung (5) zu vergebenden Adressen schon vergeben sind, und infolge der Anforderung die zweite Adresse von der zentralen Adresspoolverwaltung (6) bereitgestellt wird.

7. Verfahren nach einem der Ansprüche 4 bis 6, mit den Schritten: Bereitstellen einer weiteren ersten Adresse von einer weiteren dezentralen Adresspoolverwaltung (15), wobei die weitere dezentrale Adresspoolverwaltung (15) einer in das Telekommunikationsnetzwerk (2) eingebundenen weiteren Dienstanbietereinheit (3) zugeordnet ist; Zuordnen der weiteren ersten Adresse zu einer mit der weiteren Dienstanbietereinheit (13) gekoppelten weiteren ersten Netzteilnehmereinheit mittels der weiteren Dienstanbietereinheit (3); Bereitstellen einer weiteren zweiten Adresse von der zentralen Adresspoolverwaltung (6); und Zuordnen der weiteren zweiten Adresse zu einer mit der weiteren Dienstanbietereinheit (13) gekoppelten weiteren zweiten Netzteilnehmereinheit mittels der weiteren Dienstanbietereinheit (13).

8. Verfahren nach Anspruch 7, wobei die Zuordnung der weiteren zweiten Adresse bei der weiteren Dienstanbietereinheit (3) durch die weitere zweite Netzteilnehmereinheit angefragt wird, wobei die Bereitstellung der weiteren zweiten Adresse bei der weiteren dezentralen Adresspoolverwaltung (15) durch die weitere Dienstanbietereinheit (13) angefordert wird, wobei die Aufforderung zur Bereitstellung der weiteren zweiten Adresse an die zentrale Adresspoolverwaltung (6) weitergeleitet wird, wenn alle durch die weitere dezentrale Adresspoolverwaltung (15) zu vergebenden Adressen schon vergeben sind, und infolge der Anforderung die weitere zweite Adresse von der weiteren Adresspoolverwaltung (6) bereitgestellt wird.

9. Verfahren nach einem der Ansprüche 7 oder 8, wobei ein der weiteren zweiten Adresse zugeordneter Datenfluss zwischen dem Telekommunikationsnetzwerk (2) und der weiteren zweiten Netzteilnehmereinheit mittels der zentralen Gateway-Einheit (7) und insbesondere in Abhängigkeit einer weiteren Steuerinformation über die weitere Dienstanbietereinheit (13) geleitet wird.

10. Verfahren nach einem der Ansprüche 4 bis 9, wobei die Anzahl der von der dezentralen Adresspoolverwaltung zu vergebenden ersten Adressen auf null reduziert wird.

11. Verfahren nach einem der Ansprüche 4 bis 10, wobei ein über die zentrale Gateway-Einheit (7) geführter und insbesondere einer zweiten Adresse zugeordneter Datenfluss an der zentralen Gateway-Einheit (7) analysiert und/oder aktiv beeinflusst wird.

12. Computerprogramm mit Programmcodemitteln, mit deren Hilfe alle Schritte eines Verfahrens nach einem der Ansprüche 4 bis 11 durchführbar sind, wenn das Computerprogramm auf einem Computer oder einer entsprechenden Recheneinheit, insbesondere in einem Telekommunikationssystem (1) nach einem der Ansprüche 1 bis 3, ausgeführt wird.

13. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 4 bis 11 durchführbar sind, wenn das Computerprogramm auf einem Computer oder einer entsprechenden Recheneinheit, insbesondere in einem Telekommunikationssystem (1) nach einem der Ansprüche 1 bis 3, ausgeführt wird.

## Claims

1. Telecommunications system (1) for providing services in a telecommunications network (2) having at least one service provider unit (3) linked into the telecommunications network (2), first and second network subscriber units (4, 40) which are each coupled to the service provider unit (3), and a decentralised address pool management system (5) assigned to the service provider unit (3), the service provider unit (3) being configured to allocate a first address provided by the decentralised address pool management system (5) to the first network subscriber unit (4), the telecommunications system (1) further having a central address pool management system (6) connected to a plurality of service provider units (3, 13), and the service provider unit (3) being configured to allocate a second address provided by the central address pool management system (6) to the second network subscriber unit (40), the service provider unit (3) and/or the decentralised address pool management system (5) being configured in such a way that the second address is requested from the central address pool management system (6) only if all addresses to be issued to the assigned network subscriber units (4, 40) by the decentralised address pool management system (5) have already been issued,
**characterised in that** the telecommunications system (1) is configured in such a way that a bidirectional flow of communication between the telecommunications network (2) and the second network subscriber units (40, 40') to which addresses have been assigned from the central address pool management system (6) is always provided via a central gateway unit (7) of the telecommunications system (1).

2. Telecommunications system (1) according to claim 1, wherein the telecommunications system (1) has at least one further service provider unit (13) linked into the telecommunications network (2), further first and second network subscriber units (14) which are each coupled to the further service provider unit (13), and a further decentralised address pool management system (15) assigned to the further service provider unit (13), wherein the further service provider unit (13) is configured to allocate a further first address provided by the further decentralised address pool management system (15) to the further first network subscriber unit (14), and wherein the further service provider unit (13) is further configured to allocate a further second address provided by the central address pool management system (6) to the further second network subscriber unit.

3. Telecommunications system (1) according to any of the preceding claims, wherein the central gateway unit (7) is connected to the further service provider unit (13) and wherein the central gateway unit (7) is configured to pass the data flow assigned to the further second address between the further second network subscriber unit and the telecommunications network (2) via the further service provider unit (13).

4. Method for providing services in a telecommunications network (2), comprising the following steps:
- provision of a first address by a decentralised address pool management system (5) in the first step, the decentralised address pool management system (5) being assigned to a service provider unit (3) linked into a telecommunications network (2);
- assignment of the first address to a first network subscriber unit (4), which is coupled to the service provider unit (3), by way of the service provider unit (3) in the second step;
- provision of a second address by a central address pool management system (6) connected to a plurality of service provider units (3, 13) in the third step; and
- assignment of the second address to a second network subscriber unit (40), which is coupled to the service provider unit (3), by way of the service provider unit (3) in the fourth step, wherein the second address is requested from the central address pool management system (6) by the service provider unit (3) and/or by the decentralised address pool management system (5) only if all addresses to be issued to the assigned network subscriber units (4, 40) by the decentralised address pool management system (5) have already been issued;
and **characterised by**
- a bidirectional flow of communication between the telecommunications network (2) and the second network subscriber units (40, 40') to which addresses have been assigned from the central address pool management system (6) always being provided via a central gateway unit (7) of the telecommunications system (1).

5. Method according to claim 4, wherein in the first step the assignment of the first address is queried at the service provider unit (3) by the first network subscriber unit (4), the provision of the first address is requested at the decentralised address pool management system (5) by the service provider unit (3), and following the request the first address is provided by the decentralised address pool management system (5) if the decentralised address pool management system (5) still has addresses available to provide.

6. Method according to either claim 4 or claim 5, wherein in the third step the assignment of the second address is queried at the service provider unit (3) by the second network subscriber unit (40), the provision of the second address is requested at the decentralised address pool management system (5) by the service provider unit (3), the request to provide the second address is passed on to the central address pool management system (6) if all addresses to be issued by the decentralised address pool management system (5) have already been issued, and following the request the second address is provided by the central address pool management system (6).

7. Method according to any of claims 4 to 6, comprising the steps of: provision of a further first address by a further decentralised address pool management system (15), the further decentralised address pool management system (15) being assigned to a further service provider unit (3) linked into the telecommunications network (2); assignment of the further first address to a further first network subscriber unit, coupled to the further service provider unit (13), by way of the further service provider unit (3); provision of a further second address by the central address pool management system (6); and assignment of the further second address to a further second network subscriber unit, coupled to the further service provider unit (13), by way of the further service provider unit (13).

8. Method according to claim 7, wherein the assignment of the further second address is queried at the service provider unit (3) by the further second network subscriber unit, wherein the provision of the further second address is requested at the further decentralised address pool management system (15) by the further service provider unit (13), wherein the request to provide the further second address is passed on to the central address pool management system (6) if all addresses to be issued by the further decentralised address pool management system (15) have already been issued, and following the request the further second address is provided by the central address pool management system (6).

9. Method according to either claim 7 or claim 8, wherein a data flow assigned to the further second address is passed between the telecommunications network (2) and the further second network subscriber unit by way of the central gateway unit (7) and in particular, as a function of a further piece of control information, via the further service provider unit (13).

10. Method according to any of claims 4 to 9, wherein the number of first addresses to be issued by the decentralised address pool management system is reduced to zero.

11. Method according to any of claims 4 to 10, wherein a data flow, passed via the central gateway unit (7) and in particular assigned to a second address, is analysed and/or actively influenced at the central gateway unit (7).

12. Computer program comprising program code means, by means of which all steps of a method according to any of claims 4 to 11 can be carried out when the computer program is executed on a computer or a corresponding arithmetic unit, in particular in a telecommunications system (1) according to any of claims 1 to 3.

13. Computer program product, comprising a computer-readable medium and a computer program stored on the computer-readable medium and comprising program code means, by means of which all steps of a method according to any of claims 4 to 11 can be carried out when the computer program is executed on a computer or a corresponding arithmetic unit, in particular in a telecommunications system (1) according to any of claims 1 to 3.

## Revendications

1. Système de télécommunication (1) destiné à fournir des services dans un réseau de télécommunication (2), présentant au moins une unité de fournisseurs de services (3) intégrée dans le réseau de télécommunication (2), des première et seconde unités d'utilisateurs de réseau (4, 40) respectivement couplées à l'unité de fournisseurs de services (3) et une gestion de groupe d'adresses décentralisée (5) associée à l'unité de fournisseurs de services (3), dans lequel l'unité de fournisseurs de services (3) est configurée pour affecter une première adresse fournie par la gestion de groupe d'adresses décentralisée (5) à la première unité d'utilisateurs de réseau (4), dans lequel le système de télécommunication (1) présente en outre une gestion de groupe d'adresses centralisée (6) reliée à une pluralité d'unités de fournisseur de services (3, 13) et l'unité de fournisseurs de services (3) est configurée pour affecter une seconde adresse fournie par la gestion de groupe d'adresses centralisée (6) à la seconde unité d'utilisateurs de réseau (40), dans lequel l'unité de fournisseurs de services (3) et/ou la gestion de groupe d'adresses décentralisée (5) est configurée de telle sorte que la seconde adresse est requise par la gestion de groupe d'adresses centralisée (6) seulement lorsque toutes les adresses à attribuer par la gestion de groupe d'adresses décentralisée (5) aux unités d'utilisateurs de réseau associées (4, 40) sont déjà attribuées, **caractérisé en ce que** le système de télécommunication (1) est configuré de telle sorte qu'un flux de communications bidirectionnel entre le réseau de télécommunication (2) et les secondes unités d'utilisateurs de réseau (40, 40'), dont les adresses ont été associées à partir de la gestion de groupe d'adresses centralisée (6), est toujours réalisé par le biais d'une unité de passerelle centralisée (7) du système de télécommunication (1).

2. Système de télécommunication (1) selon la revendication 1, dans lequel le système de télécommunication (1) présente au moins une autre unité de fournisseurs de services (13) intégrée dans le réseau de télécommunication (2), respectivement une autre première et une autre seconde unités d'utilisateurs de réseau (14) couplées à l'autre unité de fournisseurs de services (13) et une autre gestion de groupe d'adresses décentralisée (15) associée à l'autre unité de fournisseurs de services (13), dans lequel l'autre unité de fournisseurs de services (13) est configurée pour affecter une autre première adresse fournie par l'autre gestion de groupe d'adresses décentralisée (15) à l'autre première unité d'utilisateurs de réseau (14) et dans lequel l'autre unité de fournisseurs de services (13) est en outre configurée pour affecter une autre seconde adresse fournie par la gestion de groupe d'adresses centralisée (6) à l'autre seconde unité d'utilisateurs de réseau.

3. Système de télécommunication(1) selon une des revendications précédentes, dans lequel l'unité de passerelle centralisée (7) est reliée à l'autre unité de fournisseurs de services (13) et dans lequel l'unité de passerelle centralisée (7) est configurée pour diriger le flux de données associé à l'autre seconde adresse entre l'autre seconde unité d'utilisateurs de réseau et le réseau de télécommunication (2) par le biais de l'autre unité de fournisseurs de services (13).

4. Procédé destiné à fournir des services dans un réseau de télécommunication (2) comprenant les étapes suivantes :
- fournir une première adresse par une gestion de groupe d'adresses décentralisée (5) dans la première étape, dans lequel la gestion de groupe d'adresses décentralisée (5) est associée à une unité de fournisseurs de services (3) intégrée dans un réseau de télécommunication (2) ;
- associer la première adresse à une première unité d'utilisateurs de réseau (4) couplée à l'unité de fournisseurs de services (3) à l'aide de l'unité de fournisseurs de services (3) dans la deuxième étape ;
- fournir une seconde adresse par une gestion de groupe d'adresses centralisée (6) reliée à une pluralité d'unités de fournisseur de services (3, 13) dans la troisième étape ; et
- associer la seconde adresse à une seconde unité d'utilisateurs de réseau (40) couplée à l'unité de fournisseurs de services (3) à l'aide de l'unité de fournisseurs de services (3) dans la quatrième étape, dans lequel la seconde adresse est requise par la gestion de groupe d'adresses centralisée (6) par le biais de l'unité de fournisseurs de services (3) et/ou par le biais de la gestion de groupe d'adresses décentralisée (5) seulement lorsque toutes les adresses à attribuer par la gestion de groupe d'adresses décentralisée (5) aux unités d'utilisateurs de réseau associées (4, 40) sont déjà attribuées ;
et **caractérisé par** :
- réaliser un flux de communications bidirectionnel entre le réseau de télécommunication (2) et les secondes unités d'utilisateurs de réseau (40, 40'), dont les adresses ont été associées à partir de la gestion de groupe d'adresses centralisée (6), toujours par le biais d'une unité de passerelle centralisée (7) du système de télécommunication (1).

5. Procédé selon la revendication 4, dans lequel dans la première étape l'association de la première adresse est demandée à l'unité de fournisseurs de services (3) par la première unité d'utilisateurs de réseau (4), la fourniture de la première adresses est requise à la gestion de groupe d'adresses décentralisée (5) par l'unité de fournisseurs de services (3) et, suite à la réquisition, la première adresse est fournie par la gestion de groupe d'adresses décentralisée (5), dans la mesure où la gestion de groupe d'adresses décentralisée (5) dispose encore d'adresses à fournir.

6. Procédé selon une des revendications 4 ou 5, dans lequel dans la troisième étape l'association de la seconde adresses est demandée à l'unité de fournisseurs de services (3) par la seconde unité d'utilisateurs de réseau (40), la fourniture de la seconde adresse est requise à la gestion de groupe d'adresses décentralisée (5) par l'unité de fournisseurs de services (3), l'invitation à fournir la seconde adresse est transféré à la gestion de groupe d'adresses centralisée (6) si toutes les adresses à attribuer sont déjà attribuées par la gestion de groupe d'adresses décentralisée (5), et, suite à la réquisition, la seconde adresse est fournie par la gestion de groupe d'adresses centralisée (6).

7. Procédé selon une des revendications 4 à 6, comprenant les étapes : fournir une autre première adresse par une autre gestion de groupe d'adresses décentralisée (15), dans lequel l'autre gestion de groupe d'adresses décentralisée (15) est associée à une autre unité de fournisseurs de services (3) intégrée dans le réseau de télécommunication (2) ; associer l'autre première adresse à une autre première unité d'utilisateurs de réseau couplée à l'autre unité de fournisseurs de services (13) à l'aide de l'autre unité de fournisseurs de services (3) ; fournir une autre seconde adresse par la gestion de groupe d'adresses centralisée (6) ; et associer l'autre seconde adresse à une autre seconde unité d'utilisateurs de réseau couplée à l'autre unité de fournisseurs de services (13) à l'aide de l'autre unité de fournisseurs de services (13).

8. Procédé selon la revendication 7, dans lequel l'association de l'autre seconde adresse est demandée à l'autre unité de fournisseurs de services (3) par l'autre seconde unité d'utilisateurs de réseau, dans lequel la fourniture de l'autre seconde adresse est requise à l'autre gestion de groupe d'adresses décentralisée (15)par l'autre unité de fournisseurs de services (13), dans lequel l'invitation à fournir l'autre seconde adresse est transféré à la gestion de groupe d'adresses centralisée (6) si toutes les adresses à attribuer par le biais de l'autre gestion de groupe d'adresses décentralisée (15) sont déjà attribuées, et, suite à la réquisition, la seconde autre adresse est fournie par l'autre gestion de groupe d'adresses centralisée (6).

9. Procédé selon une des revendications 7 ou 8, dans lequel un flux de données associé à l'autre seconde adresse entre le réseau de télécommunication (2) et l'autre seconde unité d'utilisateurs de réseau est dirigé à l'aide de l'unité de passerelle centralisée (7) et en particulier en fonction d'une autre information de commande par le biais de l'autre unité de fournisseurs de services (13) .

10. Procédé selon une des revendications 4 à 9, dans lequel le nombre de premières adresses à attribuer par la gestion de groupe d'adresses décentralisée est réduit à zéro.

11. Procédé selon une des revendications 4 à 10, dans lequel un flux de données dirigé par le biais de l'unité de passerelle centralisée (7) et en particulier associé à une seconde adresse est analysé et/ou influencé activement au niveau de l'unité de passerelle centralisée (7) .

12. Programme d'ordinateur comprenant des moyens de code de programme qui permettent de mettre en oeuvre toutes les étapes d'un procédé selon une des revendications 4 à 11 lorsque le programme d'ordinateur est exécuté sur un ordinateur ou une unité de calcul correspondante, en particulier dans un système de télécommunication (1) selon une des revendications 1 à 3.

13. Produit de programme d'ordinateur comprenant un support lisible par ordinateur et un programme d'ordinateur enregistré sur le support lisible par ordinateur comportant des moyens de code de programme, qui sont capables de mettre en oeuvre toutes les étapes d'un procédé selon une des revendications 4 à 11 lorsque le programme d'ordinateur est exécuté sur un ordinateur ou une unité de calcul correspondante, en particulier dans un système de télécommunication (1) selon une des revendications 1 à 3.
